Europäisches Patentamt

European Patent Office

Office européen des brevets

(19)

(11) **EP 1 118 873 A1**

(12) # EUROPEAN PATENT APPLICATION

(43) Date of publication:
**25.07.2001 Bulletin 2001/30**

(51) Int Cl.$^7$: **G01S 7/40**

(21) Application number: **01300488.2**

(22) Date of filing: **19.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.01.2000 GB 0001460**

(71) Applicant: **Dynex Semiconductor Limited**
**Lincoln, LN6 3LF (GB)**

(72) Inventors:
• **Redfern, Stephen W.**
  **Eagle, Lincoln (GB)**

• **Tyson, Paul A.**
  **Waddington, Lincoln (GB)**
• **Blunden, Peter P.**
  **Reepham, Lincolnshire (GB)**

(74) Representative: **Pratt, David Martin et al**
  **Withers & Rogers,**
  **Goldings House,**
  **2 Hays Lane**
  **London SE1 2HW (GB)**

(54) **Testing method and apparatus**

(57)    Apparatus for testing an alarm sensor includes a receiver, means for modifying a signal received by the receiver to simulate a "moving target" return signal, means for varying the power of the modified signal, a transmitter for transmitting the modified signal to the sensor, and means for detecting a signal output by the alarm sensor. The sensor is mounted on an opposite side of an anechoic chamber to the transmitter and the receiver. The apparatus includes a controller to reduce the attenuation of an attenuator, forming part of the power varying means, from a high level until the modified signal received by the alarm sensor is large enough to trigger an output signal.

Fig.2.

EP 1 118 873 A1

**Description**

This invention relates to a method of, and apparatus for, testing an alarm sensor; and in particular to a method of, and apparatus for, testing an alarm sensor suitable for use in a microwave frequency vehicle intruder alarm.

Vehicle intruder alarms which rely on detection of the Doppler shift of a reflected microwave signal to indicate movement within a space have been available for several years. One such alarm is described in the specification of our UK Patent Application GB-A-2 322 029, the contents of which are incorporated herein by reference.

A continuous wave vehicle intruder alarm sensor of this type responds to the movement of an object within the aperture of an antenna of the sensor, and is typically used to detect movement of human beings or parts thereof within a protected area such as the interior of a vehicle. This type of sensor will only respond to moving targets.

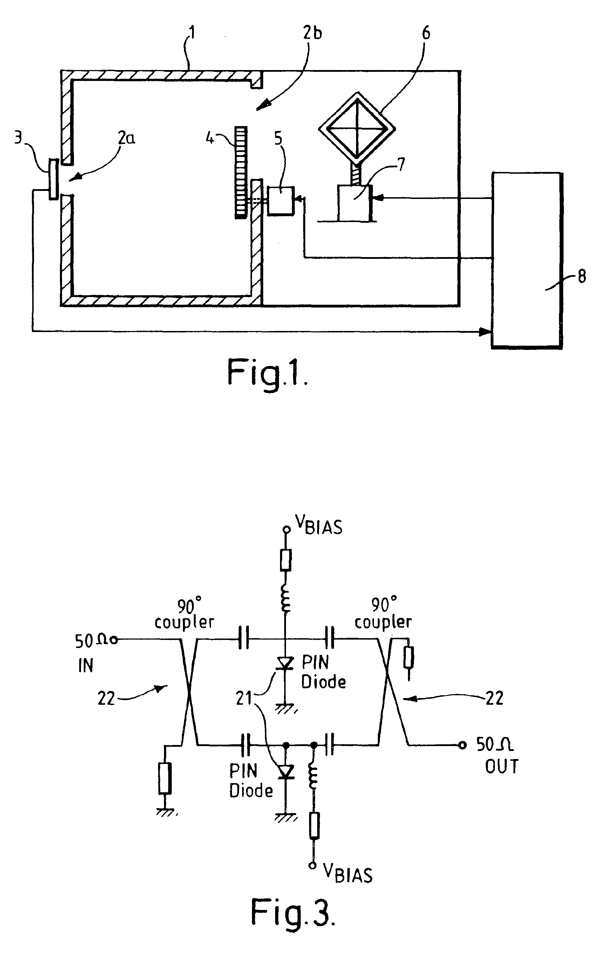

This type of vehicle intruder alarm sensor can be tested using a moving mechanical object such as a rotating vane, which generates a Doppler return signal which is dependent upon the speed of movement and angular position of the rotating vane relative to the sensor. One known method of doing this is shown in Figure 1, which shows an anechoic chamber 1 having first and second windows 2a and 2b. A vehicle intruder alarm sensor 3 is positioned across the window 2a, and a movable shutter 4 is positioned in the vicinity of the window 2b. The shutter 4 is rotatable, by means of a motor 5 and a lever system (not shown), so as to be movable into, and out of, a position in which it lies directly between the sensor 3 and a rotatable corner cube reflector 6 positioned outside the chamber 1. The reflector 6 is rotatable, about a vertical axis, by means of a motor 7, and a controller 8 is provided for controlling the two motors. A feedback line 9 provides signals output by the sensor 3 to the controller 8.

With this arrangement, electromagnetic energy returned to the sensor 3 following reflection by the reflector 6 has a range of different Doppler offset frequencies and amplitudes, due to the differing speeds of the reflecting surfaces of the reflector and the size of the aperture which opens and closes in front of the reflector. The alarm sensor of UK Patent Application GB-A-2 322 029, in common with other Doppler sensors, is set to register a trigger signal when a predetermined threshold signal level has been reached. This trigger signal is the signal fed back to the controller 8, and its level is known as the sensitivity of the sensor. Consequently, a sensitivity value can be ascribed to the device based on the position of the shutter 4 when the trigger point is reached.

This known type of arrangement has the following disadvantages:-

1. The system needs to be quite large in order to house the motors 5 and 7 and the rotatable reflector 6.

2. It is difficult to achieve good measurement repeatability without very precise control of the shutter 4.

3. Measurements are only made slowly, due to the inertia of the shutter 4 and the drive mechanism (the motor 5 and the associated lever system, and the motor 7).

4. The system generates electrical and acoustic noise, vibration and heat.

5. The system requires regular servicing.

The aim of the invention is to provide a method of, and apparatus for, testing an alarm sensor which reduces or eliminates these disadvantages.

The present invention provides apparatus for testing a Doppler alarm sensor, the apparatus comprising a receiver for receiving signals output by the sensor, means for modifying the signal received by the receiver to simulate a "moving target" return signal, means for varying the power of the modified signal, a transmitter for transmitting the modified signal to the sensor, and means for detecting a signal output by the sensor.

In a preferred embodiment, the apparatus further comprises an anechoic chamber, the sensor being mounted in one wall of the chamber, and the transmitter and the receiver being mounted in an opposite wall of the chamber.

Advantageously, the modifying means comprises a phase shifter and a signal source, the signal source driving the phase shifter with a repetitive wave form. The apparatus may further comprise an amplifier, preferably positioned between the receiver and the phase shifter.

Conveniently, the power varying means is an attenuator positioned between the phase shifter and the transmitter, and the apparatus further comprises a controller for controlling the attentuator in dependence upon signals fed back to the controller from the sensor.

Preferably, the controller is such as to reduce the attenuation of the attenuator progressively from a first high level until the modified signal received by the sensor is large enough to trigger an output signal for transmission to the controller.

The invention also provides apparatus for simulating a "moving target" return signal for transmission to a Doppler alarm sensor, the apparatus comprising a receiver for receiving signals output by the sensor, a phase shifter for modifying the signal received by the receiver, and a transmitter for transmitting the modified signal to the sensor.

The invention further provides apparatus for measuring the sensitivity of a Doppler alarm sensor, the apparatus comprising a transmitter for transmitting a signal to the sensor, an attenuator for progressively reducing the attenuation of a signal input to the transmitter, and means for sensing the output of the sensor, the sensitivity of the alarm sensor being a function of the attenuation of the attenuator when the sensor is triggered.

The invention still further provides a method of testing a Doppler alarm sensor, the method comprising the steps of outputting a signal by the sensor, receiving said output signal at a receiver, modifying the output of the signal from the receiver to simulate a "moving target" return signal, controlling the power level of the modified signal, transmitting the modified signal to the sensor, and detecting a signal output by the sensor.

The invention also provides a method of simulating a "moving target" return signal for transmission to a Doppler alarm sensor, the method comprising the steps of outputting a signal by the sensor, receiving said output signal at a receiver, modifying the signal received by the receiver using a phase shifter, and transmitting the modified signal to the sensor.

The invention still further provides a method for measuring the sensitivity of a Doppler alarm sensor, the method comprising the steps of transmitting a signal to the sensor, progressively attenuating the attenuation of a signal input to the transmitter, and sensing the output of the sensor, the sensitivity of the alarm sensor being a function of the attenuation of the attenuator when the sensor is triggered.

The invention will now be described in greater detail, by way of example, with reference to the drawings, in which:-

Figure 1 is a schematic representation of a known apparatus for testing an alarm sensor;
Figure 2 is a schematic representation of an alarm sensor testing apparatus constructed in accordance with the invention; and
Figure 3 is a circuit diagram of a pin diode attentuator forming part of the apparatus of Figure 2.

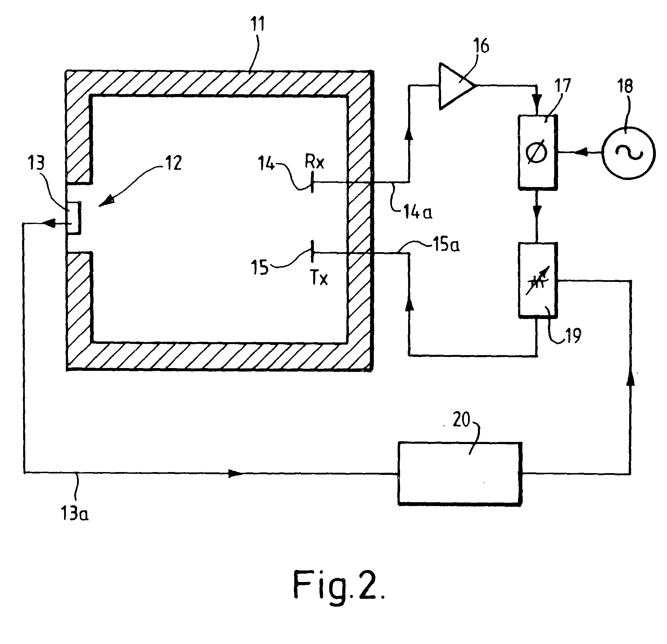

Referring to the drawings, Figure 2 shows an anechoic chamber 11 having a continuous wave vehicle intruder (microwave) alarm sensor 13 to be tested positioned within a window 12 provided in one wall of the chamber. The anechoic chamber 11 is lined with radar-absorbing material effective at the operating frequency of the sensor 13 and up to the third harmonic thereof. The size of the chamber 11 and the material of the absorber need to be commensurate with the operating frequency of the sensor 13 which, in the case of the sensor described in the specification of UK Patent Application GB-A-2 322 029, is 2.45 GHz. The chamber 11 is about 4 cubic metres in volume, and the window 12 is placed in the centre of one face thereof.

Two patch antennas 14 and 15 are positioned on the internal surface of the opposite face of the chamber 11, the antennas being directly in the boresight of the sensor 13. The two antennas 14 and 15 are arranged side-by-side, and electrical connections 14a and 15a pass from the antennas to the outside of the chamber 11. The antenna 14 is a receiver antenna, and the antenna 15 is a transmitter antenna.

The receiver antenna 14 is connected, via the connector 14a, to a linear amplifier 16, whose output is fed to a phase shifter 17. The phase shifter 17 is constructed, in a known manner, using balanced varactor diodes, although other means of electronic phase shift generation are possible. The phase shifter 17 is driven from a signal source 18 which creates a continuous low frequency phase change. The signal source 18 is a low frequency function generator, which may be implemented in software using a DAC board and a computer. The low frequency waveform generated by the source 18 can be a sine wave, a triangular wave, or any other wave form which is repetitive and has varying states such as would be generated by a Doppler return signal.

The transmitter antenna 15 is connected, via the connector 15a, to the output of an attenuator 19, the output of the phase shifter 18 being fed to the input of the attenuator. A controller 20 is provided for controlling the attenuator 19 in dependence upon signals received by the controller from the sensor 13 via a line 13a.

In use, the phase shifter 17 is set up to give around 360° of peak-to-peak phase excursion in response to the cyclic modulating signal supplied by the signal source 18.

The amplified and modulated output signal from the phase shifter 18 is fed into the attenuator 19, and then to the transmitter antenna 15 positioned in the chamber 11. In this way, an artificial Doppler sideband is added to the constant wave signal supplied by the sensor 13 via the receiver antenna 14 and the amplifier 16. This signal is fed back to the sensor 13 via the transmitter antenna 15, and is detected as a "moving target" return signal.

The purpose of the attenuator 19 is to adjust the level of the signal which is transmitted to the sensor 13 so that its trigger point can be measured. This trigger point is determined by the sensitivity of the sensor 13. Thus, a more sensitive sensor 13 will trigger on detecting an event at a lower input power level. The attenuator 19 is controlled by the controller 20 in response to signals fed back from the sensor 13 via the line 13a.

Measurement of the sensitivity is achieved by stepping the attenuator 19 through a range of attenuation values until the sensor triggers and the output is detected. The attenuator 19 is initially set to a high value, and then the attenuation is progressively reduced until the trigger point is reached. The attenuator 19 is adjustable in very small steps (0.1 dB) so that an accurate measurement can be made. The attenuation value is software controlled by a computer and a DAC card.

As shown in Figure 3, the attenuator 19 is realised using a pair of pin diodes 21 in a balanced configuration between 90° hybrid couplers 22. In this case, the attenuator 19 will deliver around 20 dB of maximum attenuation when current is driven through the diodes 21. If necessary, more than one attenuator stage could be used to provide at least 40 dB of range.

The amplifier 16 should be operated well within its linear operating region, so as to avoid the generation of any harmonic products which may corrupt the sensitivity measurement. The amplifier 16 should have a gain of approximately 40 dB, in order to provide an adequate signal level to transmit back to the sensor 13. This gain level depends on the sensitivity of the sensor 13, the size of the chamber 11, the gain of the antenna 14, and the losses in the other components of the circuit. The amplifier 16 can be built from discrete or integrated components in silicon or gallium arsenide. In this way, an amplifier 16 having a noise figure less than 5 dB and a 1 dB compression point of 17 dBm can be realised.

The frequency of the low frequency modulating signal supplied by the source 18 should be comparable with that generated by the Doppler return which the sensor 13 would see in a normal application. This Doppler frequency will depend on the operating frequency or wavelength of the sensor 13 and the speed of a typical moving target in accordance with the Doppler equation:

$$\Delta_f = 2V/\lambda$$

where $\Delta_f$ is the Doppler frequency in Hz, V is the target speed in m/s, and $\lambda$ is the radar wavelength in m.

For the sensor described in the specification of UK Patent Application GB-A-2 322 029 when used in a vehicle security system, the Doppler frequencies typically lie in the range of 1 to 40 Hz. When using the apparatus described above with reference to Figure 2 to test such a sensor, a frequency of 5 Hz is used, although other frequencies are possible.

The apparatus described above operates on the principle of generating a simulated "moving target" Doppler return signal electronically, and using this return signal to measure the sensitivity of the sensor 13. Thus, the sensor 13 generates its normal microwave frequency signal, and this is detected by the receiving antenna 14. The output of the receiver antenna 14 is amplified by the amplifier 16 whose output is modified by the phase shifter 17 and modulated by the source 18. This signal is then fed back to the transmitter antenna 15 via the attenuator 19, and the return signal is picked up by the sensor 13. The sensor 13 triggers when the received Doppler signal reaches a level that exceeds the sensitivity level of the sensor. The apparatus can readily be set up to provide an accurate sensitivity measurement by suitably calibrating the variable parameters of the system against sensors whose sensitivities have previously been accurately determined.

It will be apparent that the apparatus described above with reference to Figures 2 and 3 could be modified in a number of ways. For example, the patch antennas 14 and 15 could be replaced by any other suitable antennas such as slot antennas or bipolar antennas. Similarly, the particular form of the attenuator 19 shown in Figure 3 is not essential, and other ways of achieving the required attenuation function under programme control, including mechanical methods, are also possible. Indeed, the control range of the attentuator depends on the range of sensitivities required to be measured. When the sensor 13 triggers, the value of attenuation provided by the attentuator is detected, and this attenuation value is translated to a measurement of the sensitivity of the sensor in dB. In practice, the higher the attenuation value when the sensor 13 triggers, the more sensitive the sensor is under test. The attenuation value is called the sensitivity, and is measured in dB.

The apparatus described above could also be adapted for testing types of Doppler alarm sensor other than microwave alarm sensors.

Although the apparatus described above is configured to measure the sensitivity of the sensor 13, it will be apparent that it could also be used to measure the output power and the operating frequency of the sensor without removing the sensor from the test apparatus. These parameters are required in order to check compliance with the radio type approval requirements (ETSI 300, 440 etc). Measuring these parameters can be used to confirm that the sensor is operating correctly.

## Claims

1. Apparatus for testing a Doppler alarm sensor, the apparatus comprising:-

   a receiver for receiving signals output by the sensor;
   means for modifying the signal received by the receiver to simulate a "moving target" return signal;
   means for varying the power of the modified signal;
   a transmitter for transmitting the modified signal to the sensor; and
   means for detecting a signal output by the sensor.

2. Apparatus according to claim 1, in which the apparatus further comprises an anechoic chamber, the sensor being mounted in one wall of the chamber, and the transmitter and the receiver being mounted in an opposite wall of the chamber.

3. Apparatus according to claim 1 or claim 2, in which the modifying device comprises a phase shifter and a signal source, the signal source driving the phase shifter with a repetitive wave form.

**4.** Apparatus according to any preceding claim, in which the apparatus further comprises an amplifier, which is preferably positioned between the receiver and the phase shifter.

**5.** Apparatus according to any preceding claim, in which the power varying device is an attentuator positioned between the phase shifter and the transmitter, and the apparatus further comprises a controller for controlling the attentuator in dependence upon signals fed back to the controller from the sensor.

**6.** Apparatus according to claim 5, in which the controller is such as to reduce the attenuation of the attenuator progressively from a first high level until the modified signal received by the sensor is large enough to trigger an output signal for transmission to the controller.

**7.** A method of testing a Doppler alarm sensor, the method comprising the steps of:-

    outputting a signal by the sensor;
    receiving said output signal at a receiver;
    modifying the output of the signal from the receiver to simulate a "moving target" return signal;
    controlling the power level of the modified signal;
    transmitting the modified signal to the sensor, and;
    detecting a signal output by the sensor.

**8.** Apparatus for simulating a "moving target" return signal for transmission to a Doppler alarm sensor, the apparatus comprising:-

    a receiver for receiving signals output by the sensor;
    a phase shifter for modifying the signal received by the receiver; and
    a transmitter for transmitting the modified signal to the sensor.

**9.** Apparatus for measuring the sensitivity of a Doppler alarm sensor, the apparatus comprising:-

    a transmitter for transmitting a signal to the sensor;
    an attenuator for progressively reducing the attenuation of a signal input to the transmitter, and
    means for sensing the output of the sensor;

the sensitivity of the alarm sensor being a function of the attenuation of the attenuator when the sensor is triggered.

Fig.1.

Fig.3.

Fig.2.

**European Patent Office**

## EUROPEAN SEARCH REPORT

Application Number

EP 01 30 0488

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 27383 A (RAYTHEON CO) 3 June 1999 (1999-06-03) * page 6, line 25 – page 15, line 30; figures 1,2 * | 1,2,7,8 | G01S7/40 |
| Y | US 4 560 987 A (DOCHOW CLAUDE ET AL) 24 December 1985 (1985-12-24) * column 1, line 5 – column 1, line 38; figure 2 * * column 2, line 15 – column 2, line 47 * | 1,3-9 | |
| Y | US 4 686 534 A (EDDY FREDERICK N) 11 August 1987 (1987-08-11) * column 5, line 32 – column 6, line 58; figure 2 * | 1,3,4,7,8 | |
| Y | US 5 223 840 A (CRONYN WILLARD M) 29 June 1993 (1993-06-29) * abstract; figures 1,4 * * column 2, line 4 – column 4, line 36; figures 1,4 * | 1,4,6-9 | |
| Y | US 5 221 928 A (DAHL RANDY L) 22 June 1993 (1993-06-22) * column 5, line 61 – column 11, line 21; figures 1,3,4 * * column 1, line 11 – column 2, line 46 * | 5,6,9 | TECHNICAL FIELDS SEARCHED (Int.Cl.7) G01S |
| Y | EP 0 282 195 A (RAYTHEON CO) 14 September 1988 (1988-09-14) * abstract; figures 1,2 * | 1,6-9 | |
| Y | US 4 742 561 A (TIPTON M SCOTT) 3 May 1988 (1988-05-03) * the whole document * | 6,9 | |

The present search report has been drawn up for all claims

| Place of search | Date of completion of the search | Examiner |
|---|---|---|
| MUNICH | 12 April 2001 | Saur, E |

## EP 1 118 873 A1

### ANNEX TO THE EUROPEAN SEARCH REPORT
### ON EUROPEAN PATENT APPLICATION NO.

EP 01 30 0488

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2001

| Patent document cited in search report | | Publication date | Patent family member(s) | | Publication date |
|---|---|---|---|---|---|
| WO 9927383 | A | 03-06-1999 | US | 6114985 A | 05-09-2000 |
| | | | AU | 1414199 A | 15-06-1999 |
| | | | EP | 1034442 A | 13-09-2000 |
| US 4560987 | A | 24-12-1985 | NONE | | |
| US 4686534 | A | 11-08-1987 | NONE | | |
| US 5223840 | A | 29-06-1993 | NONE | | |
| US 5221928 | A | 22-06-1993 | US | 5298905 A | 29-03-1994 |
| EP 0282195 | A | 14-09-1988 | CA | 1325256 A | 14-12-1993 |
| | | | DE | 3888993 D | 19-05-1994 |
| | | | DE | 3888993 T | 13-10-1994 |
| | | | DK | 116388 A | 07-09-1988 |
| | | | JP | 1187481 A | 26-07-1989 |
| | | | JP | 2693468 B | 24-12-1997 |
| | | | US | 5262787 A | 16-11-1993 |
| US 4742561 | A | 03-05-1988 | NONE | | |

EPO FORM P0459

For more details about this annex : see Official Journal of the European Patent Office, No. 12/82